(19) Europäisches Patentamt
European Patent Office
Office européen des brevets

(11) EP 0 703 272 B1

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int Cl.$^6$: **C08L 23/10**, C08L 23/04

(21) Anmeldenummer: **95114169.6**

(22) Anmeldetag: **09.09.1995**

(54) **Teilvernetzte Polyolefinmischungen enthaltend Polyisobutylen**

Partially cross-linked polyolefin composition comprising polyisobutylene

Composition de polyoléfine partiellement réticulée comprénant polyisobutylène

(84) Benannte Vertragsstaaten:
**AT BE DE ES FR GB IT NL**

(30) Priorität: **19.09.1994 DE 4433272**

(43) Veröffentlichungstag der Anmeldung:
**27.03.1996 Patentblatt 1996/13**

(73) Patentinhaber: **BASF AKTIENGESELLSCHAFT**
**67056 Ludwigshafen (DE)**

(72) Erfinder:
- **Marczinke, Bernd Lothar, Dr.**
  **D-67346 Speyer (DE)**
- **Schwager, Harald, Dr.**
  **D-67346 Speyer (DE)**
- **Seiler, Erhard, Dr.**
  **D-67067 Ludwigshafen (DE)**
- **Hofmann, Jürgen**
  **D-67069 Ludwigshafen (DE)**

(56) Entgegenhaltungen:
**EP-A- 0 574 804**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 703 272 B1

Printed by Jouve, 75001 PARIS (FR)

## Beschreibung

Die vorliegende Erfindung betrifft teilvernetzte Polyolefinmischungen, enthaltend

a) ein Polymerisat aus 25 bis 97 Gew.-% eines Propylenpolymerisats (I), das 0 bis 15 Gew.-% an einpolymerisierten $C_2$-$C_{10}$-Alk-1-enen enthält und aus 3 bis 75 Gew.-% eines weiteren Propylenpolymerisats (II), das 15 bis 80 Gew.-% einpolymerisierte $C_2$-$C_{10}$-Alk-1-ene aufweist,

b) ein statistisch verteiltes Ethylencopolymerisat mit 5 bis 20 Gew.-% an einpolymerisierten $C_3$-$C_{10}$-Alk-1-enen und einer Dichte bei Raumtemperatur von 0,890 bis 0,930 g/cm$^3$

c) eine homogene Mischung aus einem hochmolekularen Polyisobutylen mit einer Molmasse (Zahlenmittel) $\overline{M}n$ von mindestens 80 000 und einem Polyolefin

d) eine Bismaleinimidoverbindung der folgenden Formel (I)

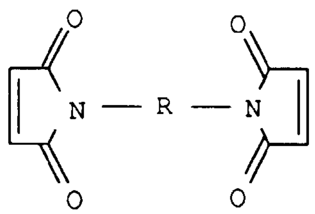

(I)

in der R die folgende Bedeutung hat:

$C_1$-$C_{20}$-Alkyl, wobei der Alkylrest mit einem oder mehreren Sauerstoffatomen unterbrochen sein kann, $C_5$-$C_7$-Cycloalkyl, $C_6$-$C_{15}$-Aryl, wobei der Cycloalkyl- bzw. Arylrest jeweils seinerseits mit einer oder mehrerer $C_1$-$C_{10}$-Alkyl- und/oder $C_1$-$C_6$-Alkoxy- und/oder $C_1$-$C_4$-Dialkylaminogruppen substituiert sein kann, sowie einen Rest der folgenden Formel (II)

$$R^1\text{-}Z\text{-}R^2 \qquad \text{(II)}$$

wobei $R^1$ und $R^2$ jeweils unabhängig voneinander für $C_1$-$C_{10}$-Alkyl-, $C_5$-$C_7$-Cycloalkyl- oder $C_6$-$C_{10}$-Arylreste stehen, die ihrerseits jeweils mit einer oder mehrerer $C_1$-$C_{10}$-Alkyl- und/ oder $C_1$-$C_6$-Alkoxy- und/oder $C_1$-$C_4$-Dialkylaminogruppen substituiert sein können,
und Z
eine $C_1$-$C_{10}$-Alkylgruppe, eine $C_1$-$C_4$-Dialkylaminogruppe, ein Sauerstoffatom oder eine Sulfongruppe bedeutet.

Außerdem betrifft die vorliegende Erfindung ein Verfahren zur Herstellung der erfindungsgemäßen teilvernetzten Polyolefinmischungen sowie Folien, Fasern, Formkörper und Schaumstoffe aus diesen Polyolefinmischungen.

Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H.G. Elias "Makromoleküle", Verlag Hüthig & Wepf, 4. Auflage, Seite 1000-1003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Es ist bekannt, Polypropylene oder Copolymerisate des Propylens mit ungesättigten Silanen in Gegenwart eines Silanolkondensationskatalysators und eines Peroxids zu vernetzen (DE-A 33 27 149 und DE-A 35 20 106). Die dabei erhaltenen Polymerisate zeichnen sich u.a. durch eine hohe Kälteschlagzähigkeit und Formbeständigkeit aus. Die Vernetzung mit Hilfe ungesättigter Silane ist jedoch verfahrenstechnisch relativ aufwendig, da in diesem Fall drei verschiedene Komponenten, das Silan, der Katalysator und das Peroxid eingesetzt werden müssen.

In der DE-A 3 901 606 wird ein Verfahren zur Herstellung von vernetzbaren Copolymerisaten des Propylens beschrieben, wobei in einem ersten Schritt die dabei verwendeten Copolymerisate mit Maleinsäurederivaten gepfropft werden. Im Anschluß daran werden die gepfropften Copolymerisate mit multifunktionellen Aminen oder Alkoholen zu vernetzbaren Polymerisaten umgesetzt. Die auf diese Weise erhaltenen Produkte sind gut lagerfähig und können leicht weiterverarbeitet werden. Die Herstellung dieser vernetzbaren Polymerisate ist jedoch relativ aufwendig, da diese in mehreren aufeinanderfolgenden Schritten erfolgt. Darüber hinaus haben die daraus erhaltenen Produkte entweder saure oder basische Eigenschaften, was für manche technische Anwendungsgebiete nicht erwünscht ist.

Die Vernetzung von kautschukartigen Materialien auf der Basis von Ethylen und Propylen mit Hilfe von Bismaleinimidoverbindungen ist ebenfalls möglich, vorausgesetzt, daß diese durch energiereiche Strahlen (S.M. Miller et al., J. Polym. Sci. 58, 737 (1982)), durch schwefelhaltige Vernetzungssysteme (W. Hofmann, Kautschuk + Gummi, Kunststoffe, 308, Nr. 4/87) oder durch Peroxidverbindungen (Y. W. Chow, G.T. Knight, Gummi-Asbest-Kunststoffe 31, 716 (1978) initiiert wird. Bei diesen Verfahren beobachtet man aber häufig einen Molmassenabbau des Propylenpolymerisats, der dessen mechanische Eigenschaften verschlechtert. Darüber hinaus sind diese Verfahren technisch relativ aufwendig.

Weiterhin wird in der US-A 4 212 787 beschrieben, thermoplastische Mischungen auf der Basis teilvernetzter Polyolefine herzustellen, bei denen zur Verbesserung der mechanischen Eigenschaften sowie zur Verringerung der Härte u.a. n-Butylkautschuke oder Polyisobutylenkautschuke zugesetzt werden. Da das Polyisobutylen in der Regel als relativ grobkörniges Produkt gehandelt wird, ist die Einarbeitung des Polyisobutylens mit zahlreichen Schwierigkeiten verbunden. Die dabei erhaltenen weichen Mischungen weisen aufgrund der mangelnden Produkthomogenität schlechte mechanische Eigenschaften auf.

EP-A-0574804 beschreibt mit Bismaleinimido verbindungen teilvernetzte Polyolefinmischungen.

Der vorliegenden Erfindung lag daher die Aufgabe zugrunde, den geschilderten Nachteilen abzuhelfen und teilvernetzte Polyolefinmischungen mit guten anwendungstechnischen Eigenschaften zu entwickeln, die nach einem wenig aufwendigen Verfahren hergestellt werden können und möglichst homogen sind.

Demgemäß wurden die eingangs definierten, teilvernetzten Polyolefinmischungen gefunden.

Die erfindungsgemäßen teilvernetzten Polyolefinmischungen enthalten ein Polymerisat a) aus 25 bis 97 Gew.-% eines Propylenpolymerisats (I), das 0 bis 15 Gew.-% an einpolymerisierten $C_2$-$C_{10}$-Alk-1-enen aufweist und aus 3 bis 75 Gew.-% eines weiteren Propylenpolymerisats (II), mit 15 bis 80 Gew.-% einpolymerisierte $C_2$-$C_{10}$-Alk-1-ene. Bevorzugt sind dabei solche Polymerisate a), die aus 35 bis 95 Gew.-% eines Propylenpolymerisats (I) mit 0 bis 12 Gew.-% einpolymerisierter $C_2$-$C_{10}$-Alk-1-ene und aus 5 bis 65 Gew.-% eines Propylenpolymerisats (II) mit 20 bis 75 Gew.-% einpolymerisierter $C_2$-$C_{10}$-Alk-1-ene bestehen. Besonders bevorzugte Polymerisate a) enthalten 40 bis 93 Gew.-% eines Propylenpolymerisats (I) mit 0 bis 9 Gew.-% einpolymerisierter $C_2$-$C_{10}$-Alk-1-ene und 7 bis 60 Gew.-% eines Propylenpolymerisats (II) mit 25 bis 70 Gew.-% einpolymerisierter $C_2$-$C_{10}$-Alk-1-ene. Vorzugsweise kann man auch ein solches Polymerisat a) verwenden, welches als Propylenpolymerisat (I) ein Propylenhomopolymerisat aufweist.

Unter einpolymerisierten $C_2$-$C_{10}$-Alk-1-enen sind in diesem Zusammenhang insbesondere Ethylen, But-1-en, Pent-1-en, Hex-1-en, Hept-1-en, Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird. Die Polymerisation kann dabei sowohl in der Gasphase, als auch in einer Lösung oder in einer Suspension durchgeführt werden.

Das Verfahren kann mit den in der Polymerisationstechnik üblichen Ziegler-Natta-Katalysatoren durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 $cm^3$/g, insbesondere von 1,0 bis 5,0 $cm^3$/g und eine spezifische Oberfläche von 10 bis 1000 $m^2$/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi- ($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (III)

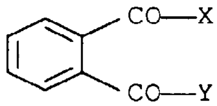

(III)

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder $SiO_2 \cdot aAl_2O_3$ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel III hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen eingesetzt, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (IV)

$$R^3_nSi(OR^4)_{4-n} \qquad (IV)$$

wobei $R^3$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^4$ gleich oder verschieden ist und eine $C_1$- bis $C_{20}$-Alkylgruppe bezeichnet und n für die Zahlen 1, 2 oder 3 steht. Besonders bevorzugt werden dabei solche Verbindungen, in denen $R^3$ eine $C_1$- bis $C_8$-Alkylgruppe oder eine 5-bis 7-gliedrige Cycloalkylgruppe, $R^4$ eine $C_1$- bis $C_4$-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan, Dimethoxyisopropylsek.butylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Polyolefinmischungen enthaltenen Polymerisate a) hergestellt werden. Nach einem bevorzugten zweistufigen Verfahren wird dabei zunächst in einer ersten Polymerisationsstufe das Propylenpolymerisat (I), und daran anschließend in einer zweiten Polymerisationsstufe das Propylenpolymerisat (II) hergestellt.

Die Polymerisation des Propylens, sowie gegebenenfalls der entsprechenden $C_2$-$C_{10}$-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 0,5 bis 5 Stunden durchgeführt. Bevorzugt sind bei der Herstellung des Propylenpolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylenpolymerisats (I) gebildet werden. Als $C_2$-$C_{10}$-Alk-1-en wird dabei insbesondere Ethylen und But-1-en, oder ein Gemisch aus diesen Comonomeren verwendet, sofern es sich bei dem Propylenpolymerisat (I) um ein Copolymerisat handelt. In diesem Fall wird bei der Herstellung des Propylenpolymerisats (I) das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylenpolymerisat (I) wird nach Beendigung der Reaktion zusammen mit dem Katalysator aus der ersten Polymerisationsstufe ausgetragen und in die zweite Polymerisationsstufe eingeführt, wo das Propylenpolymerisat (II) hergestellt wird.

Dies erfolgt in der zweiten Polymerisationsstufe dadurch, daß in Anwesenheit des Propylenpolymerisats (I) Propylen zusammen mit einem oder mehreren $C_2$-$C_{10}$-Alk-1-enen bei Drücken von 5 bis 25 bar, Temperaturen von 30 bis 80°C und mittleren Verweilzeiten des Reaktionsgemisches von 0,5 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als $C_2$-$C_{10}$-Alk-1-ene werden dabei insbesondere Ethylen und But-1-en, oder ein Gemisch aus diesen Comonomeren eingesetzt. Zur Herstellung des Propylenpolymerisats (II) wird das Propylen mit den Comonomeren in der Weise copolymerisiert, daß das Verhältnis zwischen dem Partialdruck des Propylens und dem der Comonomeren auf 0,5:1 bis 20:1, insbesondere auf 0,5:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und unter einem Gewicht von 2,16 kg aus der nach DIN 53 735 genormten Prüfvorrichtung ausgetragen wird.

Weiterhin enthält die erfindungsgemäße teilvernetzte Polyolefinmischung neben dem Polymerisat a) ein statistisch verteiltes Ethylencopolymerisat b), mit 5 bis 20 Gew.-% an einpolymerisierten $C_3$-$C_{10}$-Alk-1-enen, dessen Dichte bei Raumtemperatur 0,89 bis 0,930 g/cm$^3$ beträgt. Bevorzugt wird dabei ein solches statistisch verteiltes Ethylencopolymerisat b) eingesetzt, das 8 bis 20 Gew.-% einpolymerisierter $C_3$-$C_{10}$-Alk-ene enthält. Unter einpolymerisierten $C_3$-$C_{10}$-Alk-1-enen sind in diesem Zusammenhang insbesondere Propylen, But-1-en, Pent-1-en, Hex-1-en, Hept-1-en oder Oct-1-en oder Gemische aus diesen Comonomeren zu verstehen, wobei bevorzugt Propylen, But-1-en, Hex-1-en oder Oct-1-en verwendet werden.

Die Herstellung derartiger statistisch verteilter Ethylencopolymerisate erfolgt üblicherweise durch Niederdruckpolymerisation der Comonomere mit metallhaltigen Katalysatoren, beispielsweise mit Hilfe von titan- und aluminiumhaltigen Ziegler-Katalysatoren. Die Polymerisationsreaktion kann dabei mit den in der Technik üblichen Reaktoren, beispielsweise Rührkesseln, sowohl in der Gasphase, in Lösung oder auch in einer Aufschlämmung durchgeführt werden. In einem bevorzugt angewandten Verfahren stellt man die erfindungsgemäß eingesetzten Ethylencopolymersate b) durch Gasphasenpolymerisation mit Hilfe von Ziegler-Katalysatoren bei Drükken von 10 bis 100 bar, Temperaturen von 30 bis 100°C und mittleren Verweilzeiten von 0,5 bis 5 Stunden her. Bei diesem Verfahren wird das Partialdruckverhältnis zwischen Ethylen und den $C_3$-$C_{10}$-Alk-1-enen auf 2:1 bis 100:1 eingestellt.

Darüber hinaus liegt in den erfindungsgemäßen, teilvernetzten Polyolefinmischungen noch eine homogene Mischung c) aus einem hochmolekularen Polyisobutylen mit einer Molmasse (Zahlenmittel) $\overline{M}n$ von mindestens 80 000 und einem Polyolefin vor. Als hochmolekulare Polyisobutylene werden insbesondere solche Polymerisate mit einer Molmasse (Zahlenmittel) $\overline{M}n$ von 120 000 bis 1 000 000 verwendet.

Derartige hochmolekulare Polyisobutylene sind u.a. erhältlich durch kationische Polymerisation von Isobutylen nach dem sogenannten Bandverfahren, wobei man Isobutylen in reinem, getrockneflüssigem Ethylen auf einem schwach geneigten endlosen Stahlband mit Hilfe von Bortrifluorid kationisch polymerisiert (DE-A 3 527 551). Weiterhin werden solche hochmolekularen Polyisobutylene auch unter dem Handelsnamen Oppanol® von der BASF Aktiengesellschaft vertrieben.

Als Polyolefine können u.a. neben Polyethylen auch Polypropylen oder Polybut-1-en sowie die entsprechenden Copolymerisate des Ethylens, Propylens sowie But-1-ens verwendet werden, wobei letztere auch noch untergeordnete Anteile von höheren $C_5$-$C_8$-Alk-1-enen enthalten können. Bevorzugt wird in der homogenen Mischung c) ein Polyethylen mit einer Dichte bei Raumtemperatur von 0,890 bis 0,930 g/cm$^3$, insbesondere von 0,90 bis 0,928 g/cm$^3$, eingesetzt.

Derartige Polyolefine können mit den in der Technik üblichen Polymerisationsverfahren hergestellt werden, beispielsweise durch Hochdruckpolymerisation mit Hilfe von radikalisch zerfallenden Initiatoren, durch Polymerisation mit Ziegler- bzw. Ziegler-Natta-Katalysatoren sowie mit Phillips-Katalysatoren, oder aber durch Polymerisation mit metallocenhaltigen Katalysatoren. Die Polymerisation kann dabei in der Gasphase, in Lösung oder in einer Suspension sowohl kontinuierlich als auch diskontinuierlich durchgeführt werden. Derartige Herstellungsverfahren sind dem in der Kunststofftechnik arbeitenden Fachmann bekannt.

Die in den erfindungsgemäßen teilvernetzten Polyolefinmischungen enthaltenden homogenen Mischungen c) enthalten üblicherweise 10 bis 90 Gew.-%, insbesondere 30 bis 80 Gew.-%, des hochmolekularen Polyisobutylens und 90 bis 10 Gew.-%, insbesondere 70 bis 20 Gew.-% des Polyolefins. Die Herstellung derartiger homogener Mischungen c) erfolgt in gebräuchlichen Knet- und Mischelementen, beispielsweise in Extrudern, Mischern oder Mühlen unter üblichen Verfahrensbedingungen. Bevorzugt ist dabei die Verwendung von Extrudern, insbesondere von Doppelschneckenextrudern.

Nach einem vorteilhaften Herstellungsverfahren sind die homogenen Mischungen c) insbesondere dadurch erhältlich, daß man zunächst in einem Doppelschneckenextruder dosierfähiges, hochmolekulares Polyisobutylen als Primärkomponente einbringt, homogenisiert, aufheizt und auf eine vorgegebene Molmasse abbaut. Anschließend wird nach diesem Verfahren mittels einer sogenannten Seitenbeschickung das Polyolefin als Sekundärkomponente in die Polyisobutylenschmelze eingebracht und nachfolgend homogenisiert. Durch die getrennte Eindosierung des hochmolekularen Polyisobutylens und des Polyolefins erhält man eine homogene Mischung c), die mit anderen Polymeren gut vermengt werden kann.

Bei der Herstellung der erfindungsgemäßen teilvernetzten Polyolefinmischung wird das Polymerisat a), das statistisch verteilte Ethylencopolymerisat b) und die Mischung c) mit der Bismaleinimidoverbindung d) vereinigt. Die Bismaleinimidoverbindung d) bewirkt dabei eine teilweise Vernetzung der Polyolefinmischung. Dabei kann das statistisch verteilte Ethylencopolymerisat b) und die homogene Mischung c) dem Polymerisat a) sowohl vor, als auch nach der Umsetzung mit der Bismaleinimidoverbindung d) beigemischt werden.

Als Bismaleinimidoverbindungen d) werden in der erfindungsgemäßen Polyolefinmischung Verbindungen der folgenden Formel (I) eingesetzt,

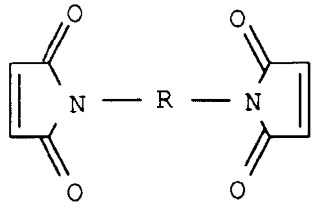

(I)

in der R die folgende Bedeutung hat:

$C_1$-$C_{20}$-Alkyl, wobei der Alkylrest mit einem oder mehreren Sauerstoffatomen unterbrochen sein kann, $C_5$-$C_7$-Cycloalkyl, $C_6$-$C_{15}$-Aryl, wobei der Cycloalkyl- bzw. Arylrest jeweils seinerseits mit einer oder mehrerer $C_1$-$C_{10}$-Alkyl- und/oder $C_1$-$C_6$-Alkoxy- und/oder $C_1$-$C_4$-Dialkylaminogruppen substituiert sein kann, sowie einen Rest der folgenden Formel II

$$R^1\text{-}Z\text{-}R^2 \qquad (II)$$

wobei $R^1$ und $R^2$ jeweils unabhängig voneinander für $C_1$-$C_6$-Alkyl-, $C_5$-$C_7$-Cycloalkyl- oder $C_6$-$C_{10}$-Arylreste stehen, die ihrerseits jeweils mit einer oder mehrerer $C_1$-$C_{10}$-Alkyl- und/oder $C_1$-$C_6$-Alkoxy- und/oder $C_1$-$C_4$-Dialkylaminogruppen substituiert sein können,
und Z eine $C_1$-$C_{10}$-Alkylgruppe, eine $C_1$-$C_4$-Dialkylaminogruppe, ein Sauerstoffatom oder eine Sulfongruppe bedeutet.

Unter diesen Bismaleinimidoverbindungen d) sind insbesondere solche Verbindungen hervorzuheben, bei denen R die folgende Bedeutung hat:

$C_2$-$C_{10}$-Alkyl, wobei der Alkylrest mit einem oder mehreren Sauerstoffatomen unterbrochen sein kann,

$C_5$-$C_7$-Cycloalkyl, $C_6$-$C_{15}$-Aryl, wobei der Cycloalkyl- bzw. Arylrest jeweils seinerseits mit einer oder mehrerer $C_1$-$C_4$-Alkylgruppen substituiert sein kann, sowie

einen Rest der folgenden Formel II $R^1$-Z-$R^2$, wobei $R^1$ und $R^2$ jeweils unabhängig voneinander für $C_1$-$C_6$-Alkyl-, $C_5$-$C_7$-Cycloalkyl- oder $C_6$-$C_{10}$-Arylreste stehen, und Z ein Sauerstoffatom oder eine Sulfongruppe bedeuten.

Folgende Verbindungen werden besonders bevorzugt als Bismaleinimidoverbindungen d) verwendet: 1,6-Bismaleinimidohexan, 1,3-Bismaleinimidobenzol, 1,3-Bismaleinimido-4-methylbenzol, 4,4'-Bismaleinimidodiphenylmethan, 4,4'-Bismaleinimido-3,5,3',5'-tetramethyldiphenylmethan, oder 3,3'-Bismaleinimidodiphenylsulfon.

Die Bismaleinimidoverbindungen können beispielsweise dadurch hergestellt werden, daß Maleinsäureanhydrid mit den entsprechenden Diaminen und anschließend mit Essigsäure und Natriumacetat umgesetzt wird. Derartige Herstellungsverfahren sind dem Fachmann bekannt.

Die erfindungsgemäßen, teilvernetzten Polyolefinmischungen sind u.a. erhältlich durch Umsetzung des Polymerisats a), des statistisch verteilten Ethylencopolymerisats b) und der homogenen Mischung c) mit der Bismaleinimidoverbindung d) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 50 bar und mittlere Verweilzeiten von 0,2 bis 5 Minuten. Die erfindungsgemäßen Polyolefinmischungen können darüber hinaus u.a. auch dadurch hergestellt werden, daß man zunächst das Polymerisat a) mit der Bismaleinimidoverbindung d) umsetzt und anschließend das statistisch verteilte Ethylencopolymerisat b) und die homogene Mischung c) hinzufügt. Die Umsetzung der einzelnen Komponenten erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

In einer bevorzugten Ausführungsform enthält die erfindungsgemäße, teilvernetzte Polyolefinmischung als weiteren Bestandteil ein statistisch verteiltes Propylencopolymerisat e) mit 1 bis 10 Gew.-% an einpolymerisierten $C_2$-$C_{10}$-Alk-1-enen. Bevorzugt ist dabei ein solches statistisch verteiltes Propylencopolymerisat e), dessen Gehalt an $C_2$-$C_{10}$-Alk-1-enen bei 2 bis 8 Gew.-% liegt. Als $C_2$-$C_{10}$-Alk-1-ene sind in diesem Zusammenhang insbesondere Ethylen, But-1-en, Pent-1-en, Hex-1-en, Hept-1-en sowie Oct-1-en oder Gemische aus diesen Comonomeren zu nennen, wobei bevorzugt Ethylen sowie But-1-en verwendet werden.

Die Herstellung derartiger statistisch verteilter Propylencopolymerisate e) kann mit den in der Polymerisationstechnik üblichen Ziegler-Natta-Katalysatoren sowohl in der Gasphase, als auch in Lösung oder in einer Aufschlämmung durchgeführt werden. Geeignete Reaktoren für diese Propylencopolymerisate e) sind u.a. absatzweise oder kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird. In einem bevorzugt angewandten Herstellungsverfahren stellt man die statistisch verteilten Propylencopolymerisate e) dadurch her, daß man in einem Reaktor Propylen zusammen mit dem weiteren $C_2$-$C_{10}$-Alk-1-en bei Drücken von 20 bis 40 bar, Temperaturen von 30 bis 100°C und mittleren Verweilzeiten von 0,5

bis 5 Stunden mit Hilfe eines Ziegler-Natta-Katalysatorsystems aus der Gasphase heraus polymerisiert und dabei das Partialdruckverhältnis zwischen Propylen und dem $C_2$-$C_{10}$-Alk-1-en auf 5:1 bis 100:1 einstellt.

Das statistisch verteilte Propylencopolymerisat e) kann dem Polymerisat a), dem statistisch verteilten Ethylencopolymerisat b) und der homogenen Mischung c) sowohl vor als auch nach der Umsetzung mit der Bismaleinimidoverbindung d) beigemischt werden.

Die erfindungsgemäßen, teilvernetzten Polyolefinmischungen enthalten bevorzugt, bezogen auf 100 Gew.-Teile, 35 bis 90 Gew.-Teile Polymerisat a), 5 bis 60 Gew.-Teile statistisch verteiltes Ethylencopolymerisat b), 5 bis 40 Gew.-Teile der homogenen Mischung c) sowie 0 bis 20 Gew.-Teile statistisch verteiltes Propylencopolymerisat e). Besonders bevorzugt ist dabei eine solche Polyolefinmischung, die, bezogen auf 100 Gew.-Teile, aus 50 bis 80 Gew.-Teilen Polymerisat a), 5 bis 30 Gew.-Teilen statistisch verteiltes Ethylencopolymerisat b), 5 bis 30 Gew.-Teile der homogenen Mischung c) sowie 0 bis 15 Gew.-Teile statistisch verteiltes Propylencopolymerisat e) besteht. Nach einem möglichen Herstellungsverfahren werden die einzelnen Bestandteile der Polyolefinmischung, also a), b), c) sowie gegebenenfalls e), zunächst in einer Mischapparatur, beispielsweise einem Extruder oder einer Mühle vermengt und anschließend durch Umsetzung mit der Bismaleinimidoverbindung d) teilweise vernetzt. Nach einem anderen Herstellungsverfahren wird zunächst das Polymerisat a) mit der Bismaleinimidoverbindung d) umgesetzt und anschließend die Komponenten b), c) sowie gegebenenfalls e) hinzugemischt.

Zur Herstellung der erfindungsgemäßen, teilvernetzten Polyolefinmischungen werden pro 100 Gew.-Teile der Komponenten a), b), c) und, falls vorhanden e) 0,001 bis 5 Gew.-Teile der Bismaleinimidoverbindung d) verwendet. Bevorzugt sind dabei solche teilvernetzten Polyolefinmischungen, die pro 100 Gew.-Teile der Komponenten a), b), c) und, falls vorhanden e) 0,005 bis 2 Gew.-Teile, insbesondere 0,01 bis 1 Gew.-Teile der Bismaleinimidoverbindung d) enthalten.

In einem bevorzugten Herstellungsverfahren wird zunächst das Polymerisat a) unmittelbar nach dessen Herstellung mit entsprechenden Mengen der Bismaleinimidoverbindung d) in einer, an den Herstellungsreaktor des Polymerisats a) angeschlossenen Mischapparatur umgesetzt. Danach werden dieser teilvernetzten Mischung entsprechende Mengen der Komponenten b), c) sowie gegebenenfalls e) hinzugefügt. Nach Beendigung der Umsetzung wird die teilweise vernetzte Kunststoffmasse aus der Mischapparatur ausgetragen und in einem daran angeschlossenen Schachttrockner von flüchtigen Ausgangsprodukten getrennt. Die auf diese Weise erhaltene Polyolefinmischung ist direkt weiterverarbeitbar.

Die Umsetzung der Komponenten a), b), c) sowie gegebenenfalls e) mit der Bismaleinimidoverbindung d) kann auch in Anwesenheit radikalisch zerfallender Initiatoren durchgeführt werden. Als radikalisch zerfallende Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertzeiten von 1 bis 30 Sekunden aufweisen. Innerhalb dieser Verbindungen sind insbesondere Dicumylperoxid, Monocumyl(tert.-butyl)-peroxid, Di(tert. butyl)peroxid, 2,5-Dimethyl-2,5-di(tert.butylperoxy)hexan und 2,5-Dimethyl-2,5-di(tert.butylperoxy)hexin-3 hervorzuheben.

In diesem Fall werden bei der Herstellung der erfindungsgemäßen, teilvernetzten Polyolefinmischungen pro 100 Gew.-Teile der Komponenten a), b), c) und, falls vorhanden e), 0,001 bis 2 Gew.-Teile des radikalisch zerfallenden Initiators eingesetzt.

Bevorzugt werden pro 100 Gew.-Teile der Komponenten a), b), c) und, falls vorhanden e) 0,001 bis 1 Gew.-Teile, insbesondere 0,002 bis 0,5 Gew.-Teile des radikalisch zerfallenden Initiators verwendet.

Die erfindungsgemäßen teilvernetzten Polyolefinmischungen weisen einen Schmelzflußindex von 0,01 bis 30 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,02 bis 5 g/10 min, bei 230°C und unter einem Gewicht von 2,16 kg, beträgt. Sie können in geringerem Umfang noch die in der Kunststofftechnik üblichen Zusatzstoffe wie beispielsweise Talk, Ruß oder Metallcarbonate enthalten.

Durch die Wahl der speziellen Komponenten der Polyolefinmischung und der Bismaleinimidoverbindung d) erhält man teilvernetzte Polyolefinmischungen, die sich insbesondere durch eine hohe Formbeständigkeit, gute Dehnungseigenschaften und eine leichte Verarbeitbarkeit auszeichnen. Die erfindungsgemäßen, teilvernetzten Polyolefinmischungen sind auf einfache Weise erhältlich, da die Vernetzungsreaktion in einem Schritt durchgeführt werden kann und die Zahl der dazu benötigten Substanzen begrenzt ist. Darüber hinaus ist es bei den erfindungsgemäßen teilvernetzten Kunststoffmassen u.a. bemerkenswert, daß sie trotz des Vorliegens von teilweise erheblichen Mengen an hochmolekularem Polyisobutylen sehr homogen sind.

Die erfindungsgemäßen teilweise vernetzten Kunststoffmassen eigenen sich aufgrund ihrer relativ guten Verarbeitbarkeit insbesondere als Materialien für den Spritzguß, das Blasformen, die Extrusion und die Herstellung von Schäumen. Sie können dabei zur Herstellung von Formkörpern, Folien und Überzugsmaterialien verwendet werden.

Beispiele

Das Beispiel 1 sowie das Vergleichsbeispiel A wurden in einem Zweischneckenextruder der Firma Werner & Pfleiderer mit einem Längen/Durchmesser-Verhältnis von 20 bis 30 durchgeführt. Die dabei verwendeten Komponenten der Polyolefinmischung a), b), c) wurden dem Zweischneckenextruder als Grieß oder Granulat zugeführt. Die Umsetzung der Bismaleinimidoverbindung d) mit den Komponenten a), b), c) erfolgte in allen Beispielen bei einer Temperatur von 200 bis 240°C, einem Druck von 20 bar und einer mittleren Verweilzeit von bis zu 1 Minute.

I. Zunächst wurden in einem Zweischneckenextruder ("ZSK 57" der Firma Werner & Pfleiderer) 75 Gew.-Teile eines hochmolekularen Polyisobutylens mit einer Molmasse (Zahlenmittel) Mn von 425 000 (Oppanol® 150, der Firma BASF Aktiengesellschaft) in den Extrudereinzug dosiert, dort bei 180°C aufgeschmolzen, gemischt und extrudiert. Der Zweischneckenextruder wies ein Längen/Durchmesser-Verhältnis von 21 auf. Dabei wurde das Einzugsgehäuse mit Wasser gekühlt und die restlichen 6 Gehäuseschüsse wurden elektrisch auf 200°C temperiert. Die -Extruderdrehzahl betrug 188 Umdrehungen/Minute, die Drehmomentauslastung lag bei einem Durchsatz von 55 kg/Stunde bei 90 %. Getrennt vom hochmolekularen Polyisobutylen wurden nach dem Aufschmelzen des hochmolekularen Polyisobutylens 25 Gew.-Teile eines Polyethylens einer Dichte, bei Raumtemperatur von 0,927 g/$cm^3$ in den vierten Gehäuseschuß dosiert und mit einer Seitendosierung (ZSB 40) in den Extruder gedrückt. Die spezifische Energieaufnahme lag bei 0,398 kW/kg. Man erhielt eine homogene Mischung c) mit einem Schmelzflußindex von 29,8 g/min, bei 190°C und 21,6 kg, nach DIN 53735.

II. Es wurden 100 Gew.-Teile eines Polymerisats a) aus 58 Gew.-% eines Propylencopolymerisats mit 3,8 Gew.-% einpolymerisiertem Ethylen und aus 42 Gew.-% eines weiteren Propylencopolymerisats mit 60 Gew.-% einpolymerisiertem Ethylen mit 0,2 Gew.-Teilen 1,3-Bismaleinimidobenzol im Zweischneckenextruder bei einer Temperatur von 240°C, einem Druck von 10 bar und einer mittleren Verweilzeit von 30 Sekunden vermischt. Der Schmelzflußindex des Polymerisats a) betrug 1,0 g/10 min., bei 230°C und 2,16 kg, nach DIN 53 735.

III.70 Gew.-Teile des nach dem Schritt II erhaltenen teilvernetzten Polymerisats a) wurden anschließend mit 10 Gew.-Teilen eines statistisch verteilten Ethylencopolymerisats b), mit 16 Gew.-% einpolymerisiertem But-1-en, einem Schmelzflußindex von 0,8 g/10 min., bei 230°C und 2,16 kg, nach DIN 53 735 und einer Dichte von 0,9 g/$cm^3$, 20 Gew.-Teilen der unter I) beschriebenen Mischung c, und 0,25 Gew.-Teilen Ruß im Zweischneckenextruder vermischt. Dies geschah bei einer Temperatur von 220°C, einem Druck von 20 bar und einer mittleren Verweilzeit von 28 Sekunden.
Der Schmelzflußindex, die Dehnung bei Streckspannung und die Reißfestigkeit der dabei erhaltenen Kunststoffmasse können der nachfolgenden Tabelle entnommen werden.

Vergleichsbeispiel A

Analog dem erfindungsgemäßen Beispiel 1 wurden die Komponenten miteinander vermischt, wobei aber anstelle der nach dem Schritt I erhaltenen, homogenen Mischung c) im Schritt III 15 Gew.-Teile des hochmolekularen Polyisobutylens ("Oppanol® 150") und 5 Gew.-Teile des Polyethylens der Dichte 0,927 g/$cm^3$ zugegeben wurden.

Der Schmelzflußindex, die Streckspannung, die Dehnung bei Streckspannung, die Reißfestigkeit und die Kerbschlagzähigkeit der dabei erhaltenen Kunststoffmasse können der nachfolgenden Tabelle entnommen werden.

Tabelle

| | Beispiel 1 | Vergleichsbeispiel A |
|---|---|---|
| Schmelzflußindex [a] [g/10 min] | 1,1 | 1,2 |
| Streckspannung [b] [MPa] | 6,7 | 6,7 |
| Dehnung bei Streckspannung [b][%] | 27 | 26 |
| Reißfestigkeit [c] [MPa] | 9,5 | 8,0 |
| Kerbschlagzähigkeit [d] [kJ/$m^2$] | 7,2 | 4,2 |

a) nach DIN 53735, bei 230°C und 2,16 kg
b) nach ISO 527
c) nach ISO 527
d) bei -40°C, nach ISO 190, Verfahren 1 A

Aus der Tabelle geht u.a. hervor, daß die erfindungsgemäßen teilvernetzten Polyolefinmischungen gemäß dem Beispiel 1 eine höhere Reißfestigkeit und Kerbschlagzähigkeit aufweisen als die aus dem Vergleichsbeispiel A bekannten Polyolefinmischungen.

**Patentansprüche**

**1.** Teilvernetzte Polyolefinmischungen mit einem Schmelzflußindex von 0,01 bis 30 g/10 min., bei 230°C und unter einem Gewicht von 2, 16 kg, enthaltend

a) ein Polymerisat aus 25 bis 97 Gew.-% eines Propylenpolymerisats (I), das 0 bis 15 Gew.-% an einpolymerisierten $C_2$-$C_{10}$-Alk-1-enen enthält und aus 3 bis 75 Gew.-% eines weiteren Propylenpolymerisats (II), das 15 bis 80 Gew.-% einpolymerisierte $C_2$-$C_{10}$-Alk-1-ene aufweist,

b) ein statistisch verteiltes Ethylencopolymerisat mit 5 bis 20 Gew.-% an einpolymerisierten $C_3$-$C_{10}$-Alk-1-enen und einer Dichte bei Raumtemperatur von 0,890 bis 0,930 g/cm$^3$

c) eine homogene Mischung aus einem hochmolekularen Polyisobutylen mit einer Molmasse (Zahlenmittel) $\overline{M}n$ von mindestens 80 000 und einem Polyolefin

d) eine Bismaleinimidoverbindung der folgenden Formel (I)

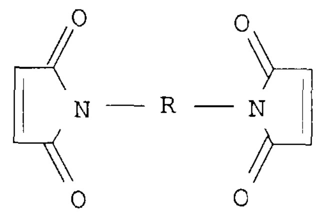

(I)

in der R die folgende Bedeutung hat:

$C_1$-$C_{20}$-Alkyl, wobei der Alkylrest mit einem oder mehreren Sauerstoffatomen unterbrochen sein kann, $C_5$-$C_7$-Cycloalkyl, $C_6$-$C_{15}$-Aryl, wobei der Cycloalkyl- bzw. Arylrest jeweils seinerseits mit einer oder mehrerer $C_1$-$C_{10}$-Alkyl- und/oder $C_1$-$C_6$-Alkoxy- und/oder $C_1$-$C_4$-Dialkylaminogruppen substituiert sein kann, sowie einen Rest der folgenden Formel (II)

$$R^1\text{-}Z\text{-}R^2 \qquad \text{(II)}$$

wobei $R^1$ und $R^2$ jeweils unabhängig voneinander für $C_1$-$C_{10}$-Alkyl-, $C_5$-$C_7$-Cycloalkyl- oder $C_6$-$C_{10}$-Arylreste stehen, die ihrerseits jeweils mit einer oder mehrerer $C_1$-$C_{10}$-Alkyl- und/oder $C_1$-$C_6$-Alkoxy- und/oder $C_1$-$C_4$-Dialkylaminogruppen substituiert sein können,
und Z
eine $C_1$-$C_{10}$-Alkylgruppe, eine $C_1$-$C_4$-Dialkylaminogruppe, ein Sauerstoffatom oder eine Sulfongruppe bedeutet und wobei pro 100 Gew.-Teile der Komponenten a), b) und c) 0,001 bis 5 Gew.-Teile der Bismaleinverbindung der Formel (I) verwendet werden.

**2.** Teilvernetzte Polyolefinmischungen nach Anspruch 1, die als weiteren Bestandteil
e) ein statistisch verteiltes Propylencopolymerisat mit 1 bis 10 Gew.-% an einpolymerisierten $C_2$-$C_{10}$-Alk-1-enen enthält.

**3.** Teilvernetzte Polyolefinmischungen nach den Ansprüchen 1 oder 2, wobei das Polymerisat a) aus 35 bis 95 Gew.-% eines Propylenpolymerisats (I) mit 0 bis 12 Gew.-% einpolymerisierter $C_2$-$C_{10}$-Alk-1-ene und aus 5 bis 65 Gew.-% eines Propylenpolymerisats (II) mit 20 bis 75 Gew.-% einpolymerisierter $C_2$-$C_{10}$-Alk-1-ene besteht.

4. Teilvernetzte Polyolefinmischungen nach den Ansprüchen 1 bis 3, wobei das Polymerisat a) als Propylenpolymerisat (I) ein Propylenhomopolymerisat enthält.

5. Teilvernetzte Polyolefinmischungen nach den Ansprüchen 1 bis 4, wobei als Bismaleinimidoverbindungen d) Verbindungen der Formel (I) verwendet werden, in der R die folgende Bedeutung hat:

   $C_2$-$C_{10}$-Alkyl, wobei der Alkylrest mit einem oder mehreren Sauerstoffatomen unterbrochen sein kann, $C_5$-$C_7$-Cycloalkyl,
   $C_6$-$C_{15}$-Aryl, wobei der Cycloalkyl- bzw. Arylrest jeweils seinerseits mit einer oder mehrerer $C_1$-$C_4$-Alkylgruppen substituiert sein kann, sowie einen Rest der Formel (II) $R^1$-Z-$R^2$,
   wobei $R^1$ und $R^2$ jeweils unabhängig voneinander für $C_1$-$C_6$-Alkyl-, $C_5$-$C_7$-Cycloalkyl- oder $C_6$-$C_{10}$-Arylreste stehen, und Z ein Sauerstoffatom oder eine Sulfongruppe bedeutet.

6. Teilvernetzte Polyolefinmischungen nach den Ansprüchen 1 bis 5, wobei die Polymerisate a), b), c) und e) in folgenden Mengenverhältnissen, bezogen auf 100 Gew.-Teile, verwendet werden:

| | |
|---|---|
| 35 bis 90 Gew.-Teile | Polymerisat a) |
| 5 bis 60 Gew.-Teile | statistisch verteiltes Ethylencopolymerisat b) |
| 5 bis 40 Gew.-Teile | homogene Mischung aus hochmolekularem Polyisobutylen und einem Polyolefin c, |
| 0 bis 20 Gew.-Teile | statistisch verteiltes Propylencopolymerisat e) |

7. Teilvernetzte Polyolefinmischungen nach den Ansprüchen 1 bis 6, wobei pro 100 Gew.-Teile der Komponenten a), b), c) und, falls vorhanden e) 0,001 bis 5 Gew.-Teile der Bismaleinimidoverbindung d) verwendet werden.

8. Teilvernetzte Polyolefinmischungen nach den Ansprüchen 1 bis 7, wobei die homogene Mischung c) als Polyolefin ein Polyethylen mit einer Dichte bei Raumtemperatur von 0,89 bis 0,930 g/$cm^3$ enthält.

9. Teilvernetzte Polyolefinmischungen nach den Ansprüchen 1 bis 8, wobei die homogene Mischung c) aus 10 bis 90 Gew.-% des hochmolekularen Polyisobutylens und aus 90 bis 10 Gew.-% des Polyolefins besteht.

10. Verfahren zur Herstellung von teilvernetzten Polyolefinmischungen gemäß den Ansprüchen 1 bis 9, dadurch gekennzeichnet, daß man die Komponenten a), b), c) und, falls vorhanden e) bei Temperaturen von 180 bis 280°C, Drücken von 1 bis 100 bar und mittleren Verweilzeiten des Reaktionsgemisches von 0,2 bis 10 Minuten mit der Bismaleinimidoverbindung d) umsetzt.

11. Verfahren zur Herstellung von teilvernetzten Polyolefinmischungen nach Anspruch 10, dadurch gekennzeichnet, daß man zunächst die Bismaleinimidoverbindung d) mit dem Polymerisat a) unmittelbar nach dessen Herstellung in einer, an den Herstellungsreaktor angeschlossenen Mischapparatur umsetzt und anschließend die Komponenten b), c), sowie gegebenenfalls e) hinzufügt.

12. Verfahren zur Herstellung von teilvernetzten Polyolefinmischungen nach den Ansprüchen 10 oder 11, dadurch gekennzeichnet, daß man die Umsetzung der Komponenten a), b), c) und, falls vorhanden e) mit der Bismaleinimidoverbindung d) in Anwesenheit radikalisch zerfallender Initiatoren durchführt.

13. Folien, Fasern und Formkörper aus den teilvernetzten Polyolefinmischungen gemäß den Ansprüchen 1 bis 9.

14. Schaumstoffe aus den teilvernetzten Polyolefinmischungen gemäß den Ansprüchen 1 bis 9.

## Claims

1. A partially crosslinked polyolefin blend with a melt flow of from 0.01 to 30 g/10 min at 230°C and under a weight of 2.16 kg, containing

   a) a polymer of from 25 to 97% by weight of a propylene polymer (I), which contains from 0 to 15% by weight of polymerized $C_2$-$C_{10}$-alk-1-enes, and of from 3 to 75% by weight of a further propylene polymer (II), which contains from 15 to 80% by weight of polymerized $C_2$-$C_{10}$-alk-1-enes,

b) a random ethylene copolymer containing from 5 to 20% by weight of polymerized $C_3$-$C_{10}$-alk-1-enes and having a density of from 0.890 to 0.930 g/cm$^3$ at room temperature,

c) a homogeneous mixture of a high molecular weight polyisobutylene having a number average molecular weight $\overline{M}n$ of at least 80,000 and a polyolefin and

d) a bismaleimido compound of the formula (I)

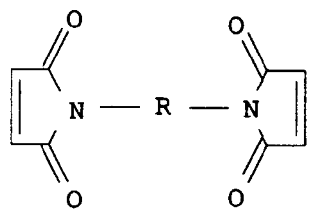

(I)

where

R is $C_1$-$C_{20}$-alkyl, where the alkyl radical may be interrupted by one or more oxygen atoms, $C_5$-$C_7$-cycloalkyl, $C_6$-$C_{15}$-aryl, where the cycloalkyl or aryl radical may each in turn be substituted by one or more $C_1$-$C_{10}$-alkyl or $C_1$-$C_6$-alkoxy or $C_1$-$C_4$-dialkylamino groups, or a radical of the formula (II)

$$R^1\text{-}Z\text{-}R^2 \qquad \text{(II)}$$

where $R^1$ and $R^2$, independently of one another, are each $C_1$-$C_{10}$-alkyl, $C_5$-$C_7$-cycloalkyl or $C_6$-$C_{10}$-aryl, each of which in turn may be substituted by one or more $C_1$-$C_{10}$-alkyl or $C_1$-$C_6$-alkoxy or $C_1$-$C_4$-dialkylamino groups,
and Z is $C_1$-$C_{10}$-alkyl, $C_1$-$C_4$-dialkylamino, oxygen or sulfonyl, and where from 0.001 to 5 parts by weight of the bismaleimido compound of the formula (I) are used per 100 parts by weight of the compounds a), b) and c).

**2.** A partially crosslinked polyolefin blend as claimed in claim 1, which contains, as a further component, e) a random propylene copolymer containing from 1 to 10% by weight of polymerized $C_2$-$C_{10}$-alk-1-enes.

**3.** A partially crosslinked polyolefin blend as claimed in claim 1 or 2, wherein the polymer a) consists of from 35 to 95% by weight of a propylene polymer (I), containing from 0 to 12% by weight of polymerized $C_2$-$C_{10}$-alk-1-enes, and of from 5 to 65% by weight of a propylene polymer (II), containing from 20 to 75% by weight of polymerized $C_2$-$C_{10}$-alk-1-enes.

**4.** A partially crosslinked polyolefin blend as claimed in any of claims 1 to 3, wherein the polymer a) contains a propylene homopolymer as propylene polymer (I).

**5.** A partially crosslinked polyolefin blend as claimed in any of claims 1 to 4, wherein the bismaleimido compound d) used is a compound of the formula (I) in which R is $C_2$-$C_{10}$-alkyl, where the alkyl radical may be interrupted by one or more oxygen atoms, or $C_5$-$C_7$-cycloalkyl, $C_6$-$C_{15}$-aryl, where the cycloalkyl or aryl radical may each in turn be substituted by one or more $C_1$-$C_4$-alkyl groups, or a radical of the formula (II) $R^1$-Z-$R^2$, where $R^1$ and $R^2$ independently of one another, are each $C_1$-$C_6$-alkyl, $C_5$-$C_7$-cycloalkyl or $C_6$-$C_{10}$-aryl and Z is oxygen or sulfonyl.

**6.** A partially crosslinked polyolefin blend as claimed in any of claims 1 to 5, wherein the polymers a), b), c) and e) are used in the following ratios, based on 100 parts by weight:

| | |
|---|---|
| from 35 to 90 | parts by weight of polymer a) |
| from 5 to 60 | parts by weight of random ethylene copolymer b) |
| from 5 to 40 | parts by weight of a homogeneous mixture of high molecular weight polyisobutylene and a polyolefin c) |

from 0 to 20 parts by weight of a random propylene copolymer e).

**7.** A partially crosslinked polyolefin blend as claimed in any of claims 1 to 6, wherein from 0.001 to 5 parts by weight of the bismaleimido compound d) are used per 100 parts by weight of the components a), b), c) and, if present, e).

**8.** A partially crosslinked polyolefin blend as claimed in any of claims 1 to 7, wherein the homogeneous mixture c) contains a polyethylene having a density of from 0.89 to 0.930 g/cm$^3$ at room temperature as the polyolefin.

**9.** A partially crosslinked polyolefin blend as claimed in any of claims 1 to 8, wherein the homogeneous mixture c) consists of from 10 to 90% by weight of the high molecular weight polyisobutylene and of from 90 to 10% by weight of the polyolefin.

**10.** A process for the preparation of a partially crosslinked polyolefin blend as claimed in any of claims 1 to 9, wherein the components a), b), c) and, if present, e) are reacted with the bismaleimido compound d) at from 180 to 280°C and from 1 to 100 bar and during an average residence time of the reaction mixture of from 0.2 to 10 minutes.

**11.** A process for the preparation of a partially crosslinked polyolefin blend as claimed in claim 10, wherein the bismaleimido compound d) is first reacted with the polymer a) directly after its preparation in a mixing apparatus connected to the preparation reactor, and the components b), c) and, if required, e) are then added.

**12.** A process for the preparation of a partially crosslinked polyolefin blend as claimed in claim 10 or 11, wherein the reaction of the components a), b), c) and, if present, e) with the bismaleimido compound d) is carried out in the presence of a free radical initiator.

**13.** A film, fiber or molding comprising a partially crosslinked polyolefin blend as claimed in any of claims 1 to 9.

**14.** A foam comprising a partially crosslinked polyolefin blend as claimed in any of claims 1 to 9.

## Revendications

**1.** Mélanges de polyoléfines partiellement réticulés d'un indice d'écoulement à l'état fondu de 0,01 à 30 g/10 min., à 230°C et sous un poids de 2,16 kg, qui contiennent

a) un polymère constitué de 25 à 97% en poids d'un polymère du propylène (I), qui contient de 0 à 15% en poids d'alc-1-ènes en $C_2$ à $C_{10}$, incorporés par polymérisation et de 3 à 75% en poids d'un autre polymère du propylène (II) qui présente de 15 à 80% en poids d'alc-1-ènes en $C_2$ à $C_{10}$, incorporés par polymérisation,
b) un copolymère de l'éthylène stochastiquement réparti comportant de 5 à 20% en poids d'alc-1-ènes en $C_3$ à $C_{10}$, incorporés par polymérisation et d'une masse volumique spécifique à la température ambiante de 0,890 à 0,930 g/cm$^3$,
c) un mélange homogène d'un polyisobutylène de poids moléculaire élevé d'une masse moléculaire (moyenne en nombre) Mn d'au moins 80 000 et d'une polyoléfine,
d) un composé du type bismaléinimide de la formule (I) ci-dessous

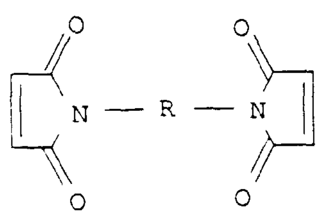

(I)

dans laquelle

R représente un radical alkyle en $C_1$ à $C_{20}$ où le radical alkyle peut être interrompu par un ou plusieurs atomes d'oxygène, un radical cycloalkyle en $C_5$ à $C_7$, un radical aryle en $C_6$ à $C_{15}$, où le radical cycloalkyle ou aryle peut, à son tour, être substitué par un ou plusieurs radicaux alkyle en $C_1$ à $C_{10}$ et/ou alcoxy en

$C_1$ à $C_6$ et/ou dialkylamino en $C_1$ à $C_4$, comme aussi un radical de la formule (II) suivante

$$R^1\text{-}Z\text{-}R^2 \qquad (II)$$

dans laquelle $R^1$ et $R^2$ représentent, chacun indépendamment l'un de l'autre, des radicaux alkyle en $C_1$ à $C_{10}$, cycloalkyle en $C_5$ à $C_7$, ou aryle en $C_6$ à $C_{10}$, qui, de leur côté, peuvent à chaque fois être substitués par un ou plusieurs radicaux alkyle en $C_1$ à $C_{10}$ et/ou alcoxy en $C_1$ à $C_6$ et/ou dialkylamino en $C_1$ à $C_4$ et Z

représente un radical alkyle en $C_1$ à $C_{10}$, un radical dialkylamino en $C_1$ à $C_4$, un atome d'oxygène, ou un radical sulfone et où, par 100 parties en poids des composants a), b) et c), on utilise de 0,001 à 5 parties en poids du composé bismaléinique de la formule (I).

**2.** Mélanges de polyoléfines partiellement réticulés suivant la revendication 1, qui contiennent, à titre de constituant supplémentaire,
e) un copolymère du propylène à répartition stochastique, qui contient de 1 à 10% en poids d'alc-1-ènes en $C_2$ à $C_{10}$, incorporés par polymérisation.

**3.** Mélanges de polyoléfines partiellement réticulés suivant les revendications 1 ou 2, où le polymère a) est constitués de 35 à 95% en poids d'un polymère du propylène (I) avec de 0 à 12% en poids d'alc-1-ènes en $C_2$ à $C_{10}$, incorporés par polymérisation et de 5 à 65% en poids d'un polymère du propylène (II) avec 20 à 75% en poids d'alc-1-ènes en $C_2$ à $C_{10}$, incorporés par polymérisation.

**4.** Mélanges de polyoléfines partiellement réticulés suivant les revendications 1 à 3, où le polymère a) contient un homopolymère du propylène, à titre de polymère du propylène (I).

**5.** Mélanges de polyoléfines partiellement réticulés suivant les revendications 1 à 4, où on utilise, à titre de composés du type bismaléinimide d), des composés de la formule (I) dans laquelle R représente un radical alkyle en $C_2$ à $C_{10}$, où le radical alkyle peut être interrompu par un ou plusieurs atomes d'oxygène, un radical cycloalkyle en $C_5$ à $C_7$, un radical aryle en $C_6$ à $C_{15}$, où le radical cycloalkyle ou aryle peut, à son tour, chaque fois être substitué par un ou plusieurs radicaux alkyle en $C_1$ à $C_4$, ainsi qu'un radical de la formule (II) $R^1$-Z-$R^2$, où $R^1$ et $R^2$ représentent, à chaque fois indépendamment l'un de l'autre, un radical alkyle en $C_1$ à $C_6$, un radical cycloalkyle en $C_5$ à $C_7$, ou un radical aryle en $C_6$ à $C_{10}$ et Z représente un atome d'oxygène ou un groupe sulfone.

**6.** Mélanges de polyoléfines partiellement réticulés suivant les revendications 1 à 5, où les polymères a), b), c) et e) s'utilisent dans les proportions quantitatives suivantes, par rapport à 100 parties en poids : 35 à 90 parties en poids de polymère a),

| | |
|---|---|
| 5 à 60 parties en poids | de copolymère de l'éthylène à répartition stochastique b) |
| 5 à 40 parties en poids | d'un mélange homogène de polyisobutylène de poids moléculaire élevé et d'une polyoléfine c, |
| 0 à 20 parties en poids | de copolymère du propylène à répartition stochastique e). |

**7.** Mélanges de polyoléfines partiellement réticulés suivant les revendications 1 à 6, où par 100 parties en poids des composants a), b), c) et si présent e), on utilise de 0,001 à 5 parties en poids du composé du type bismaléinimide d).

**8.** Mélanges de polyoléfines partiellement réticulés suivant les revendications 1 à 7, où le mélange homogène c) contient, à titre de polyoléfine, un polyéthylène d'une masse volumique spécifique à la température ambiante de 0,89 à 0,930 g/$cm^3$.

**9.** Mélanges de polyoléfines partiellement réticulés suivant les revendications 1 à 8, où le mélange homogène c) se compose de 10 à 90% en poids du polyisobutylène de poids moléculaire élevé et de 90 à 10% en poids de la polyoléfine.

**10.** Procédé de préparation de mélanges de polyoléfines partiellement réticulés suivant les revendications 1 à 9, caractérisé en ce que l'on fait réagir les composants a), b), c) et, si présent, e), à des températures de 180 à 280°C, sous des pressions de 1 à 100 bars et avec des durées de séjour moyennes du mélange réactionnel de 0,2 à 10

minutes, avec le composé du type bismaléinimide d).

**11.** Procédé de préparation de mélanges de polyoléfines partiellement réticulés suivant la revendication 10, caractérisé en ce que l'on fait d'abord réagir le composé du type bismaléinimide d) avec le polymère a), immédiatement après sa préparation dans un appareil de mélange raccordé au réacteur de préparation et on ajoute ensuite les composants b), c), comme éventuellement, aussi e).

**12.** Procédé de préparation de mélanges de polyoléfines partiellement réticulés suivant les revendication 10 ou 11, caractérisé en ce que l'on entreprend la réaction des composants a), b), c) et, si présent, e), avec le composé du bismaléinimide d), en présence d'amorceurs à décomposition radicalaire.

**13.** Feuilles, fibres et articles moulés obtenus à partir des mélanges de polyoléfines partiellement réticulés suivant les revendications 1 à 9.

**14.** Mousses en mélanges de polyoléfines partiellement réticulés suivant les revendications 1 à 9.